# EUROPEAN PATENT APPLICATION

(11) **EP 2 589 910 A1**
(43) Date of publication of application: **08.05.2013**
(21) Application number: 11800994.3
(22) Date of filing: 01.07.2011
(51) Int. Cl.: F27B 9/02, C21D 1/00, F27B 9/10, F27B 9/12, F27B 9/26, F27D 7/02, F27D 9/00, F27D 11/08, C21D 1/09

(54) **MULTI-CHAMBER HEAT TREATMENT DEVICE**

(30) Priority: 02.07.2010 JP 2010151563
(71) Applicant: IHI Corporation, Tokyo 135-8710 (JP); IHI Machinery and Furnace Co., Ltd., Minato-ku, Tokyo 108-0075 (JP)
(72) Inventor: KATSUMATA Kazuhiko, Tokyo 135-8710 (JP)
(74) Representative: Lamb, Martin John Carstairs
(86) International application number: PCT/JP2011/065179
(87) International publication number: WO 2012/002532

(57) **Abstract**

A multi-chamber heat treatment device (S1) includes a plurality of treatment chambers having a heat treatment chamber, the device including: a cooling chamber (3) serving as the heat treatment chamber configured to cool a treatment target by latent heat of liquid particles; treatment chambers (1, 2) different from the cooling chamber (3); and drying devices (11, 19) configured to dry the cooling chamber (3).

## Description

### [Technical Field]

The present invention relates to a multi-chamber heat treatment device. This application claims priority to and the benefit of Japanese Patent Application No. 2010-151563 filed on July 2, 2010, the disclosure of which is incorporated herein by reference.

### [Background Art]

A multi-chamber heat treatment device having a plurality of treatment chambers including a heat treatment chamber has been used when performing a treatment such as quenching on a metal component serving as a treatment target from the related art (See, Patent Document 1).
The multi-chamber heat treatment device generally has a heating chamber configured to heat the treatment target, and a cooling chamber configured to cool the treatment target heated in the heating chamber or the like, as a treatment chamber.

### [Prior Art]

### [Patent Document]

[Patent Document 1] Japanese Unexamined Patent Application, First Publication No. 1999-153386

### [Summary of the Invention]

### [Problems to be Solved by the Invention]

Gas cooling and oil cooling have generally been used as methods of cooling the treatment target from the related art.
The gas cooling is a method of cooling the treatment target by spraying a cooling gas onto the treatment target, and has excellent cooling control characteristics since the amount of spray of the cooling gas and the distribution thereof can be easily controlled.
The oil cooling is a method of cooling the treatment target by immersing the treatment target in cooling oil and has a high cooling efficiency since heat transfer efficiency between the treatment target and the cooling oil is high.

However, the gas cooling has a problem in that the cooling efficiency is not high, since the heat transfer efficiency between the treatment target and the cooling gas is low. Furthermore, the oil cooling has a problem in that the cooling control characteristics are not high since the entire treatment target is immersed in the cooling oil and thus it is difficult to finely control the cooling speed.
For the above-mentioned reasons, in recent years, in order to balance the cooling efficiency of the treatment target and the cooling control characteristics, a method of cooling the treatment target using latent heat of liquid particles in the cooling chamber has been suggested.

When cooling the treatment target using the latent heat of the liquid particles, the liquid particles are filled or sprayed into the cooling chamber, the liquid particles attach to the treatment target, and the latent heat is removed from the treatment target when the liquid particles vaporize. As a result, the treatment target is cooled.

In the above-mentioned multi-chamber heat treatment device, when adopting the method of cooling the treatment target using the latent heat of the liquid particles, there is a need to fill or spray the liquid particles into the cooling chamber included in the multi-chamber heat treatment device.
However, in the multi-chamber heat treatment device, when filling or spraying the liquid particles into the cooling chamber, the liquid particles also naturally attach to an inner wall or the like of the cooling chamber in addition to the treatment target. As a result, the liquid particles attached to parts other than the treatment target remain without vaporizing, since the temperature of the attachment region is lower than that of the treatment target.

If the liquid particles which do not vaporize remain in the cooling chamber, when transferring the treatment target between the cooling chamber and another treatment chamber, the liquid particles or liquid (that is, a cooling liquid) formed by the condensation of the liquid particles pollute another treatment chamber. Therefore, in some cases, all the treatment chambers included in the multi-chamber heat treatment device may be polluted with the cooling liquid along when the treatment target is transferred between the treatment chambers.
For example, when the heating chamber included in the multi-chamber heat treatment device is polluted with the cooling liquid, an oxidized film may be formed on the treatment target due to the drop of the heating temperature, and thus the treatment target may unintentionally become discolored.

An object of the present invention is to prevent a treatment chamber other than the cooling chamber from being polluted with the cooling liquid in the multi-chamber heat treatment device.

### [Means for Solving the Problems]

The present invention adopts the following configuration as means for solving the above-mentioned problems.

According to an aspect of the present invention, there is provided a multi-chamber heat treatment device including a plurality of treatment chambers having a heat treatment chamber, the device including a cooling chamber serving as the heat treatment chamber configured to cool a treatment target by latent heat of liquid particles; another treatment chamber different from the cooling chamber; and a drying device configured to dry the cooling chamber.

Furthermore, the drying device may include a hot wind feed device configured to supply hot wind into the cooling chamber.

Furthermore, the drying device may include a cooling gas feed device configured to send the cooling gas capable of being used for cooling the treatment target into the cooling chamber to perform drying.

Additionally, the device may include nozzles configured to spray a liquid particle into the cooling chamber, and a header pipe configured to guide the cooling liquid serving as the liquid particles to the nozzles, and the cooling gas feed device may send the cooling gas into the cooling chamber through the nozzles and the header pipe.

Furthermore, the other treatment chamber different from the cooling chamber may include a heating chamber configured to perform a heat treatment of the treatment target.

Furthermore, the other treatment chamber different from the cooling chamber may include an intermediate conveyance chamber placed between the heating chamber and the cooling chamber.

Furthermore, the other treatment chamber different from the cooling chamber may include a plasma treatment chamber configured to perform a plasma treatment on the treatment target.

Furthermore, the device may include an electrode that is fixedly placed inside the plasma treatment chamber, and comes into contact with a conductive tray on which the treatment target is mounted when the treatment target is conveyed into the plasma treatment chamber.

Furthermore, the device may include a lifting device on which the treatment chambers connected to each other are placed in a height direction to transfer the treatment target between the treatment chambers connected to each other.

Furthermore, the hot wind feed device may be available for a tempering treatment that is performed by supplying the hot wind into the cooling chamber on which the treatment target is mounted.

### [Effect of the Invention]

According to the present invention, the cooling chamber is dried by the drying device. Thus, by drying the cooling chamber before transferring the treatment target between the cooling chamber and another treatment chamber, the cooling liquid (including the liquid particles and liquid formed by the condensation of the liquid particles) remaining in the cooling chamber is evaporated, and thus it is possible to prevent the cooling liquid from flowing into another treatment chamber.
According to the present invention, it is possible to prevent a processing chamber other than the cooling chamber from being polluted with the cooling liquid in the multi-chamber heat treatment device.

### [Brief Description of the Drawings]

FIG. 1 is a plan view that illustrates a schematic configuration of a multi-chamber heat treatment device in an embodiment of the present invention.
FIG. 2 is a cross-sectional view taken along line A-A of FIG. 1.
FIG. 3 is a cross-sectional view taken along line B-B of FIG. 1.
FIG. 4 is a functional block diagram of the multi-chamber heat treatment device in an embodiment of the present invention.
FIG. 5 is a cross-sectional view of a plasma treatment chamber included in a modified example of the multi-chamber heat treatment device in an embodiment of the present invention.

### [Embodiments of the Invention]

Hereinafter, an embodiment of a multi-chamber heat treatment device according to the present invention will be described with reference to the accompanying drawings. In addition, in the following drawings, in order to set each member to a recognizable size, scaling of each member is suitably changed.

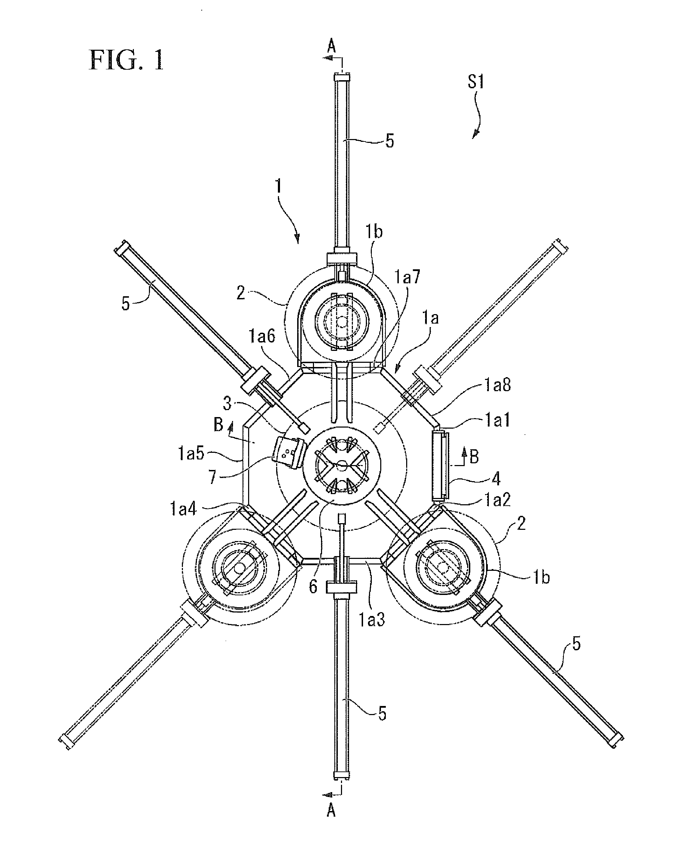

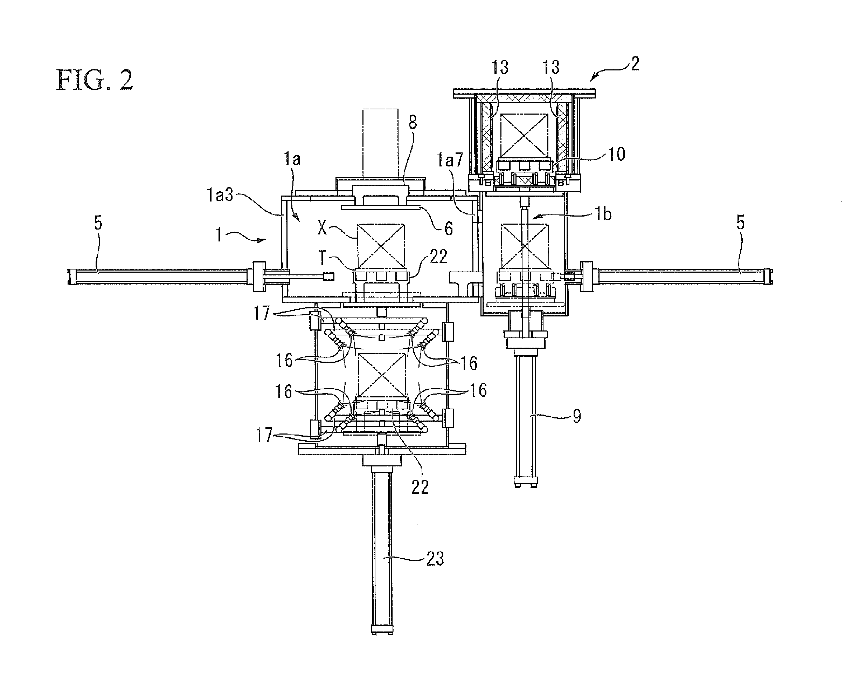

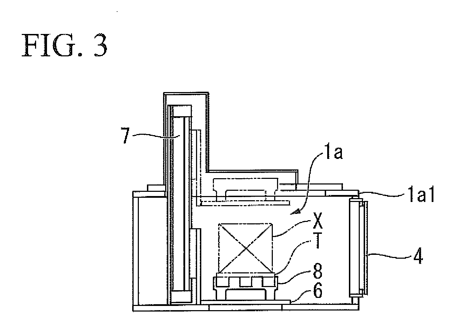

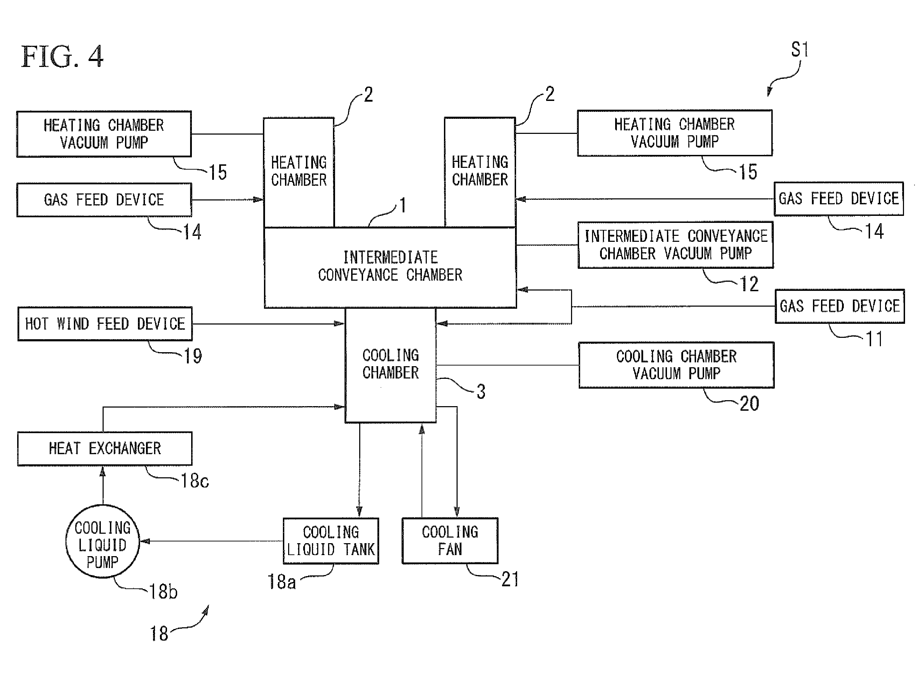

FIG. 1 is a plan view that illustrates a schematic configuration of a multi-chamber heat treatment device S1 of the present embodiment. FIG. 2 is a cross-sectional view taken along line A-A of FIG. 1. FIG. 3 is a cross-sectional view taken along line B-B of FIG. 1. Furthermore, FIG. 4 is a functional block diagram of the multi-chamber heat treatment device S1 of the present embodiment. In addition, in FIGS. 1 to 3, some components illustrated in FIG. 4 are omitted, and in FIG. 4, some components illustrated in FIGS. 1 to 3 are omitted. In FIG. 3, a cooling chamber 3 as will be mentioned below is not illustrated. FIGS. 1 and 3 illustrate a state in which an upper lid 6 as will be mentioned below is closed. Furthermore, FIG. 2 illustrates a state in which the upper lid 6 as will be mentioned below rises.

As illustrated in FIGS. 1 and 4, the multi-chamber heat treatment device S1 of the present embodiment is a heat treatment device for quenching a treatment target X serving as a metal component. The multi-chamber heat treatment device S1 includes an intermediate conveyance chamber 1 (a treatment chamber), a heating chamber 2 (a treatment chamber), and a cooling chamber 3 (a treatment chamber).

The intermediate conveyance chamber 1 is placed between the heating chamber 2 and the cooling chamber 3, and is a chamber for conveying the treatment target X between the heating chamber 2 and the cooling chamber 3. The intermediate conveyance chamber 1 has a central chamber 1a and a heating lifting chamber 1b. In addition, the intermediate conveyance chamber 1 performs the treatment of conveying the treatment target X. That is, the intermediate conveyance chamber 1 functions as one of the treatment chambers of the present invention.

As illustrated in FIG. 1, the central chamber 1a is formed in a regular octagonal shape and is a chamber through which all of the treatment targets X treated in the multi-chamber heat treatment device S1 of the present embodiment pass.
The central chamber 1a includes eight side walls 1a1 to 1a8. One side wall 1a1 of the side walls 1a1 to 1a8 is provided with a conveyance door 4 serving as an entrance to the multi-chamber heat treatment device S1 of the present embodiment. The treatment target X is conveyed into the central chamber 1a via the conveyance door 4, and is conveyed out of the central chamber 1a via the conveyance door 4.

As illustrated in FIG. 1, the central chamber 1a is configured so that the heating lifting chamber 1b can be attached to the side walls 1a2, 1a4 and 1a7. Furthermore, the central chamber 1a is configured so that a push device 5 can be attached to the side walls 1a3, 1a6 and 1a8.
In the multi-chamber heat treatment device S1 of the present embodiment, the heating lifting chamber 1b is attached to the side walls 1a2 and 1a7. Furthermore, the push device 5 is attached to the side walls 1a3 and 1a6 faces the heating lifting chamber 1b.
The push device 5 horizontally pushes and conveys the treatment target X along a rail provided inside the intermediate conveyance chamber 1 by pressing a tray T on which the treatment target X is mounted.

The central chamber 1a is configured so that the cooling chamber 3 can be attached to a floor portion from a lower part, and the central chamber 1a is formed with an opening by which a central portion of the floor portion communicates with the cooling chamber 3 from the central chamber 1a (that is, the intermediate conveyance chamber 1). Furthermore, the opening is able to be closed by the upper lid 6 that can be opened and closed. That is, the intermediate conveyance chamber 1 and the cooling chamber 3 are isolated by the upper lid 6 being closed.
As illustrated in FIGS. 1 and 3, an upper lid lifting device 7 for lifting the upper lid 6 is installed inside the central chamber 1a at a position at which the device 7 does not interfere with the push device 5. Furthermore, as illustrated in FIGS. 2 and 3, a mounting table 8 upon which the tray T can be mounted is provided on an upper surface of the upper lid 6, and thus the treatment target X is configured to be capable of being accommodated in the central chamber 1a when the upper lid 6 is closed.

The heating lifting chamber 1b is a chamber that accommodates the treatment target X conveyed into the heating chamber 2 from the intermediate conveyance chamber 1 henceforth or the treatment target X conveyed into the intermediate conveyance chamber 1 from the heating chamber 2. The heating lifting chamber 1b is able to accommodate the floor portion capable of being opened and closed of the heating chamber 2 and the mounting table 10 installed on the floor portion, and accommodates the treatment target X for each mounting table 10.
As illustrated in FIG. 2, a lifting device 9 configured to lift the treatment target X is installed below the heating lifting chamber 1b. The treatment targets X and the mounting table 10 are lifted and conveyed in the heating lifting chamber 1b by the above-mentioned lifting device 9.
As illustrated in FIG. 1, each of the heating lifting chambers 1b is provided with the push device 5, and thus the treatment target X can be conveyed from the heating lifting chamber 1b to the central chamber 1a using the push device 5.

As illustrated in FIG. 4, a gas feed device 11 for supplying an atmosphere-forming gas to the inside of the intermediate conveyance chamber 1 is connected to the intermediate conveyance chamber 1.
The gas feed device 11 supplies nitrogen gas as the atmosphere-forming gas to the intermediate conveyance chamber 1. Furthermore, as illustrated in FIG. 4, the gas feed device 11 is also connected to the cooling chamber 3 in addition to the intermediate conveyance chamber 1 to supply the atmosphere-forming gas to the cooling chamber 3.
In addition, as illustrated in FIG. 4, an intermediate conveyance chamber vacuum pump 12 for vacuum-exhausting the inside of the intermediate conveyance chamber 1 is connected to the intermediate conveyance chamber 1.

The heating chamber 2 is a cylindrical chamber configured to perform the heat treatment of the treatment target X, and is installed above the heating lifting chambers 1b. In other words, the multi-chamber heat treatment device S1 of the present embodiment includes two heating chambers 2. In addition, the heating chamber 2 is a heat treatment chamber of the present invention that performs the treatment (heat treatment) known as the heat treatment on the treatment target X. That is, the heating chamber 2 corresponds to another treatment chamber different from the cooling chamber in the present invention.
The heating chambers 2 are provided with a heater 13 and the treatment target X is subjected to the heat treatment by the heat generation of the heater 13. In addition, as the heater 13, it is possible to use an electric heating heater that uses nickel chrome (Ni-Cr), molybdenum (Mo) or graphite as a heating element, a heater that performs heating with high-frequency electric power or the like.

As illustrated in FIG. 4, a gas feed device 14 for supplying the atmosphere-forming gas to the inside of the heating chamber 2 is connected to the heating chambers 2.
The gas feed device 14 supplies, for example, nitrogen gas and acetylene gas as the atmosphere-forming gas to the heating chamber 2.
In addition, as illustrated in FIG. 4, a heating chamber vacuum pump 15 for vacuum-exhausting the inside of the heating chamber 2 is connected to the heating chamber 2.

The cooling chamber 3 is a heat treatment chamber configured to cool the treatment target using the latent heat of a mist serving as liquid particles, and is connected to the lower part of the central chamber 1a of the intermediate conveyance chamber 1 as mentioned above.
A plurality of nozzles 16 configured to spray the mist into the cooling chamber 3 and a plurality of header pipes 17 configured to guide the cooling liquid serving as the mist to the plurality of nozzles 16 are installed inside the cooling chamber 3.

As illustrated in FIG. 4, a cooling liquid recovery and feed device 18 configured to recover the cooling liquid from the cooling chamber 3, cool the recovered cooling liquid again and supply the cooling liquid to the header pipe 17 is connected to the cooling chamber 3.
As illustrated in FIG. 4, the cooling liquid recovery and feed device 18 includes a cooling liquid tank 18a configured to store the cooling liquid recovered from the cooling chamber 3, a cooling liquid pump 18b configured to pump the cooling liquid stored in the cooling liquid tank 18a to the header pipe 17, and a heat exchanger 18c configured to cool the cooling liquid pumped by the cooling liquid pump 18b.

In the multi-chamber heat treatment device S1 of the present embodiment, a hot wind feed device 19 (drying device) for drying the cooling chamber 3 is connected to the cooling chamber 3.
The hot wind feed device 19 dries the inside of the cooling chamber 3 by supplying the hot wind into the cooling chamber 3.
The hot wind feed device 19 is connected to the header pipe 17, and supplies the hot wind into the cooling chamber 3 through the header pipe 17 and the nozzle 16.
As the gas made as the hot wind in the hot wind feed device 19, air or an inert gas such as nitrogen gas can be used.
Although the temperature of the hot wind depends on the kind of the cooling fluid used in the cooling chamber 3, the pressure of the cooling chamber 3 or the like, when the cooling liquid is water, the temperature is preferably about 110 °C to 120 °C. The temperature range is a temperature range in which water is able to be evaporated (removed from the treatment target X) at atmospheric pressure, and is a temperature range in which the burden on a seal material provided in the upper lid 6, the opening or the like can be reduced.

As illustrated in FIG. 4, a cooling chamber vacuum pump 20 for vacuum-exhausting the inside of the cooling chamber 3 is connected to the cooling chamber 3.
In inside of the cooling chamber 3, a cooling fan 21 is connected to the inside of the cooling chamber 3. That is, the cooling chamber 3 is also configured to enable the treatment target X to be cooled by gas, by supplying the atmosphere-forming gas from the gas feed device 11 into the cooling chamber 3 and circulating the atmosphere-forming gas in the cooling chamber 3 via a heat exchanger (which is a heat exchanger different from the heat exchanger 18c and is not illustrated in FIG. 4), the header pipe 17 and the nozzle 16 by driving the cooling fan 21.

In the multi-chamber heat treatment device S1 of the present embodiment, the gas feed device 11 is able to dry the inside of the cooling chamber 3 by blowing the cooling gas available for cooling the treatment target X into the cooling chamber 3.
That is, in the multi-chamber heat treatment device S1 of the present embodiment, the gas feed device 11 can be used as the cooling gas feed device in the present invention and can also function as a drying device. In addition, when the gas feed device 11 functions as the drying device, there is no particular need to cool the atmosphere-forming gas using the heat exchanger 18c.
In the multi-chamber heat treatment device S1 of the present embodiment, the gas feed device 11 is connected to the header pipe 17 to blow the atmosphere-forming gas serving as the cooling gas into the cooling chamber 3 through the header pipe 17 and the nozzle 16.

As illustrated in FIG. 2, a mounting table 22 capable of mounting the treatment target X for each tray T is installed inside the cooling chamber 3, and a lifting device 23 capable of lifting the mounting table 22 is installed below the cooling chamber 3.
When the above-mentioned upper lid 6 is opened, the lifting device 23 transfers the treatment target X between the intermediate conveyance chamber 1 and the cooling chamber 3. Furthermore, the lifting device 23 is able to raise the mounting table 22 up to the inside of the central chamber 1a of the intermediate conveyance chamber 1.

In the multi-chamber heat treatment device S1 of the present embodiment, in order to handle a liquid (cooling liquid) in the cooling chamber 3, the cooling chamber 3 is placed in a lower part in which the liquid is most easily supplied and exhausted. As illustrated in FIG. 2, the intermediate conveyance chamber 1 is connected to the upper part of the cooling chamber 3, and the heating chamber 2 is connected to the upper part of the intermediate conveyance chamber 1. The treatment target X is transferred between the cooling chamber 3 and the intermediate conveyance chamber 1 and between the heating chamber 2 and the intermediate conveyance chamber 1 using the lifting devices 9 and 22.
That is, in the multi-chamber heat treatment device S1 of the present embodiment, the connected treatment chambers (the intermediate conveyance chamber 1, the heating chamber 2 and the cooling chamber 3) are placed in a height direction, and the treatment target X is transferred between the connected treatment chambers using the lifting devices 9 and 22.

Next, an example of the quenching operation in the multi-chamber heat treatment device S1 of the present embodiment will be described. In addition, the multi-chamber heat treatment device S1 of the present embodiment includes a controller that is not illustrated, and the operation mentioned below will be mainly performed by the controller.

Firstly, the conveyance door 4 provided in the side wall 1a1 of the central chamber 1a of the intermediate conveyance chamber 1 is opened. The treatment target X mounted on the tray T is conveyed into the central chamber 1a of the intermediate conveyance chamber 1. After the conveyance door 4 is closed, the intermediate conveyance chamber 1 is vacuum-exhausted by the intermediate conveyance chamber vacuum pump 12. As a result, the atmosphere-forming gas is supplied into the intermediate conveyance chamber 1 by the gas feed device 11.

When the atmosphere formation in the intermediate conveyance chamber 1 is completed, the treatment target X is conveyed into the predetermined heating chamber 2.
For example, when the treatment target X is conveyed up to the heating chamber 2 connected to the heating lifting chamber 1b attached to the side wall 1a2 of the central chamber 1a, the treatment target X is pushed for each tray T and conveyed up to the heating lifting chamber 1b using the push device 5 attached to the side wall 1a6.
In the heating lifting chamber 1b, before the treatment target X is conveyed thereinto, the mounting table 10 in the heating chamber 2 is lowered using the lifting device 9 and stays. The treatment target X pushed by the push device 5 is placed on the mounting table 10.
Thereafter, the treatment target X on the mounting table 10 is conveyed up to the heating chamber 2 by being raised by the lifting device 9.

The heating chamber 2 is vacuum-exhausted by the heating chamber vacuum pump 15 in advance, and is supplied with the atmosphere-forming gas by the gas feed device 14. When the treatment target X is conveyed into the heating chamber 2 by the lifting device 9, the treatment target X is subjected to the heat treatment by the heater 13.
While performing the heat treatment of the treatment target X in one heating chamber 2, the other heating chamber 2 is sealed up. Thus, when the other heating chamber 2 is vacant, while performing the heat treatment of the treatment target X in one heating chamber 2, another treatment target X can be conveyed into the other heating chamber 2.

When the heat treatment in the heating chamber 2 is completed, the treatment target X accommodated in the heating chamber 2 is lowered up to the heating lifting chamber 1b of the intermediate conveyance chamber 1 again using the lifting device 9. The treatment target X lowered up to the heating lifting chamber 1b is conveyed up to the center of the central chamber 1a for each tray T using the push device 5.

In the intermediate conveyance chamber 1, before transferring the treatment target X from the heating chamber 2, the upper 1id 6 is raised by the upper lid lifting device 7. In addition, the mounting table 22 raised by the lifting device 23 is placed in an opened opening.
Thus, the treatment target X lowered up to the heating lifting chamber 1b is conveyed onto the mounting table 22, by being conveyed up to the center of the central chamber 1a.

When the treatment target X is conveyed up to the mounting table 22, the mounting table 22 is lowered by the lifting device 23, the treatment target X is conveyed into the cooling chamber 3, and the upper lid 6 is also closed.
The cooling chamber 3 is vacuum-exhausted by the cooling chamber vacuum pump 20 in advance, and is supplied with the atmosphere-forming gas from the gas feed device 11. When the treatment target X is conveyed into the cooling chamber 3 by the lifting device 23, the treatment target X is subjected to the cooling treatment.

Specifically, the cooling liquid is supplied to the header pipe 17 by the cooling liquid recovery and feed device 18, and the cooling liquid is sprayed into the cooling chamber 3 from the nozzle 16, thereby obtaining a state in which the mist is filled in the cooling chamber 3. The mist filled in the cooling chamber 3 attaches to the treatment target X, and the treatment target X is cooled by the latent heat of the mist.
While performing the cooling treatment of the treatment target X in one cooling chamber 3, the other cooling chamber 3 is sealed. Thus, while performing the cooling treatment of the treatment target X in the cooling chamber 3, another treatment target X can be conveyed into the vacant heating chamber 2.

In addition to cooling using the mist or instead of cooling using the mist, the gas cooling of cooling the treatment target X by spraying the cooling gas to the treatment target X may be performed.
In this case, the cooling gas is sprayed to the treatment target X via the header pipe 17 and the nozzle 16 to perform cooling by supplying the atmosphere-forming gas into the cooling chamber 3 from the gas feed device 11, driving the cooling fan 21 and cooling the atmosphere-forming gas using a heat exchanger (which is a heat exchanger different from the heat exchanger 18c and is not illustrated in FIG. 4).

In the multi-chamber heat treatment device S1 of the present embodiment, when cooling of the treatment target X is completed in the cooling chamber 3, the cooling chamber 3 is dried by supplying the hot wind into the cooling chamber 3 using the hot wind feed device 19 after opening the cooling chamber 3 to atmospheric pressure.
The hot wind from the hot wind feed device 19 is supplied into the cooling chamber 3 through the header pipe 17 and the nozzle 16 that are the most difficult to dry. Thus, the cooling liquid in the cooling chamber 3 is reliably evaporated, and the cooling chamber 3 is reliably dried.

In addition to the drying treatment of the cooling chamber 3 using the hot wind feed device 19 or instead of the drying treatment, the cooling chamber 3 may be dried by blowing the atmosphere-forming gas (cooling gas available for cooling the treatment target X) into the cooling chamber 3 from the gas feed device 11 through the header pipe 17 and the nozzle 16.

After drying the above-mentioned cooling chamber 3, the treatment target X subjected to the cooling treatment is conveyed to the intermediate conveyance chamber 1 by the raising of the upper lid 6 using the upper lid lifting device 7 and the raising of the mounting table 22 into the intermediate conveyance chamber 1 using the lifting device 23.
Thereafter, the treatment target X subjected to the heat treatment, the cooling treatment and the quenching treatment is conveyed out of the multi-chamber heat treatment device S1 of the present embodiment from the conveyance door 4.

According to the multi-chamber heat treatment device S1 of the present embodiment, the cooling chamber 3 is dried before transferring the treatment target X from the cooling chamber 3 to the intermediate conveyance chamber 1. Accordingly, according to the multi-chamber heat treatment device S1 of the present embodiment, before transferring the treatment target X from the cooling chamber 3 to the intermediate conveyance chamber 1, the cooling liquid (including the mist and liquid formed by the condensation of the mist) remaining in the cooling chamber 3 is evaporated, and thus it is possible to prevent the cooling liquid from flowing in the intermediate conveyance chamber 1.
Thus, according to the multi-chamber heat treatment device S1 of the present embodiment, it is possible to prevent treatment chambers (the intermediate conveyance chamber 1 and the heating chamber 2) other than the cooling chamber 3 from being polluted with the cooling liquid.

Furthermore, the multi-chamber heat treatment device S1 of the present embodiment adopts a configuration in which the hot wind feed device 19 functions as the drying device of the present invention, that is, a configuration in which the drying device of the present invention includes the hot wind feed device 19.
According to the multi-chamber heat treatment device S1 of the present embodiment adopting the above-mentioned configuration, the inside of the cooling chamber 3 is dried by being exposed to the hot wind. Thus, every corner of the cooling chamber 3 can be dried, and thus the cooling chamber 3 can be reliably dried.

The treatment target X cooled by the cooling chamber 3 is in a state in which a so-called quenching treatment is completed. A structure (martensite) formed in the treatment target X by the quenching treatment is an unstable structure. For this reason, when the treatment target X subjected to the quenching treatment is left at a normal temperature, in some cases, a quenching crack or the like may be caused. Thus, generally, there is a need to perform a tempering treatment of heating the treatment target X subjected to the quenching treatment again at a low temperature by another device.
In addition, the multi-chamber heat treatment device S1 of the present embodiment includes the hot wind feed device 19 to dry the inside of the cooling chamber 3 by supplying the hot wind to the cooling chamber 3 after cooling the treatment target X in the cooling chamber 3. In the meantime, the treatment target X mounted on the cooling chamber 3 is exposed to the hot wind. The treatment target X is substantially heated to perform the tempering treatment by the exposure of the treatment target X to the hot wind supplied from the hot wind feed device 19. In the multi-chamber heat treatment device S1 of the present embodiment, the hot wind feed device 19 is also able to be used in the tempering treatment of the treatment target X. That is, it is possible to perform the quenching treatment and the tempering treatment of the treatment target X in the same device.

Furthermore, the multi-chamber heat treatment device S1 of the present embodiment adopts a configuration in which the gas feed device 11 (the cooling gas feed device) functions as the drying device of the present invention, that is, a configuration in which the drying device of the present invention includes the gas supply device 11.
According to the multi-chamber heat treatment device S1 of the present embodiment adopting the above-mentioned configuration, it is possible to perform the gas-cooling of the treatment target X, and to dry the cooling chamber 3.

Furthermore, the multi-chamber heat treatment device S1 of the present embodiment adopts a configuration in which the hot wind from the hot wind feed device 19 and the atmosphere-forming gas from the gas feed device 11 are blown into the cooling chamber 3 through the header pipe 17 and the nozzle 16.
Thus, the inside of the header pipe 17 and the nozzle 16 is exposed to the hot wind or the atmosphere-forming gas, and thus it is possible to reliably dry the inside of the header pipe 17 and the nozzle 16 from which it is difficult to evaporate the cooling liquid.

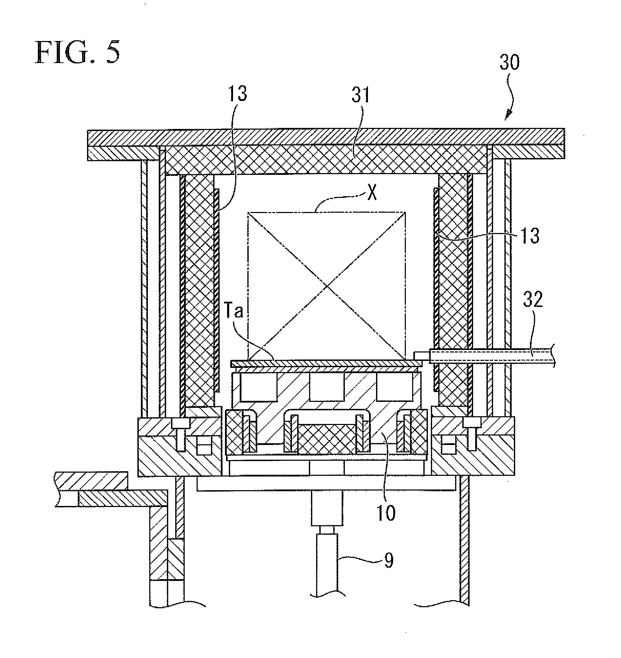

Furthermore, the multi-chamber heat treatment device S1 of the present embodiment adopts a configuration including the heating chamber 2. Thus, it is possible to complete the quenching treatment of the treatment target X using only the multi-chamber heat treatment device S1 of the present embodiment.
In addition, the multi-chamber heat treatment device of the present invention need not necessarily include the heating chamber 2. For example, instead of the heating chamber 2, the device may include a plasma treatment chamber 30 that performs a plasma treatment of the treatment target X illustrated in FIG. 5.

FIG. 5 is a cross-sectional view of a plasma treatment chamber 30. The plasma treatment chamber 30 has a cylindrical shape like the heating chamber 2, and at least an inner wall 31 thereof is formed of a metallic material.
When performing the plasma treatment of the treatment target X, the treatment target X is mounted on a metallic conductive tray Ta and is conveyed. An electrode 32 conducting with the conductive tray Ta is included inside the plasma treatment chamber 30.

As illustrated in FIG. 5, the electrode 32 is fixedly placed inside the plasma treatment chamber 30, and is placed at a position in contact with the conductive tray Ta with the treatment target X mounted thereon when the treatment target X is conveyed to the plasma treatment chamber 30.

According to the multi-chamber heat treatment device including the plasma treatment chamber 30, the conductive tray Ta and the electrode 32 conduct with each other when the treatment target X is raised by the lifting device 9 and the accommodation thereof in the plasma treatment chamber 30 is completed. That is, it is possible to conduct the conductive tray Ta with the electrode 32 without separately performing the operation of securing the conduction between the conductive tray Ta and the electrode 32.

For example, plasma is generated between the inner wall 31 and the treatment target X by grounding the inner wall 31 to a base electric potential and applying a negative voltage to the treatment target X via the electrode 32, and thus the treatment target X is subjected to the plasma treatment.

In the multi-chamber heat treatment device of the present invention, in addition to the heating chamber 2 or instead of the heating chamber 2, the plasma treatment chamber 30 may be installed. When including the plasma treatment chamber 30, the conductive tray Ta and the electrode 32 can be easily conducted with each other, and thus it is possible to easily perform the plasma treatment of the treatment target X.

The description will now return to the multi-chamber heat treatment device S1 of the present embodiment. The multi-chamber heat treatment device S1 of the present embodiment adopts a configuration in which the intermediate conveyance chamber 1 is provided between the heating chamber 2 and the cooling chamber 3.
According to the multi-chamber heat treatment device S1 of the present embodiment including the above-mentioned configuration, even if the cooling liquid flows out from the cooling chamber 3, the intermediate conveyance chamber 1 serves as a buffering area, and thus it is possible to prevent the cooling liquid from reaching the heating chamber 2. Thus, according to the multi-chamber heat treatment device S1 of the present embodiment, it is possible to stably perform the heat treatment of the multi-chamber heat treatment device S1.

Furthermore, according to the multi-chamber heat treatment device S1 of the present embodiment, the treatment chambers (the intermediate conveyance chamber 1, the heating chamber 2 and the cooling chamber 3) connected to each other are placed in a height direction, and the treatment target X is transferred between the connected treatment chambers by the lifting devices 9 and 22.
According to the multi-chamber heat treatment device S1 of the present embodiment, since the shape thereof when viewed on a plane is compact, the device can be installed in a small installation area. Furthermore, since the frequency of vertically conveying the treatment target X while supporting the treatment target X from a lower part increases, the treatment target X can be stably conveyed.

Although the preferred embodiments of the present invention have been described with reference to the accompanying drawings, the present invention is not limited to the above-mentioned embodiment. All the shapes of the respective components illustrated in the above-mentioned present embodiment, a combination thereof or the like is an example, and various modifications can be made based on the design requirements or the like without departing from the spirit and scope of the present invention.

For example, in the above-mentioned embodiment, a configuration has been described which includes the intermediate conveyance chamber 1 and the heating chamber 2 as treatment chambers other than the cooling chamber 3.
The present invention is not limited thereto but may also be applied to a multi-chamber heat treatment device including only the cooling chamber and the heating chamber as the treatment chambers, a multi-chamber heat treatment device including only the cooling chamber and the conveyance chamber as the treatment chambers, and a multi-chamber heat treatment device including only the cooling chamber and the plasma treatment chamber as the treatment chambers.

Furthermore, in the above-mentioned embodiment, a configuration has been described which cools the treatment target X using the latent heat of the mist in the cooling chamber 3.
The present invention is not limited thereto, but may be applied to a multi-chamber heat treatment device that cools the treatment target X by the latent heat of the liquid particles having a greater particle diameter than the mist.

Furthermore, in the above-mentioned embodiment, a configuration in which the cooling chamber 3 is filled with the mist has been described.

The present invention is not limited thereto, but may adopt a configuration in which the mist is sprayed to the treatment target X in the cooling chamber 3 to cool the treatment target X.

Furthermore, in the above-mentioned embodiment, a configuration has been described which includes both of the hot wind feed device 19 and the gas feed device 11 and can dry the cooling chamber 3 by either of the hot wind feed device 19 and the gas feed device 11.
The present invention is not limited thereto, but may adopt, for example, a configuration that includes only the hot wind feed device 19.

Furthermore, in the above-mentioned embodiment, a configuration has been described in which the treatment chambers (the intermediate conveyance chamber 1, the heating chamber 2 and the cooling chamber 3) connected to each other are arranged vertically, and the treatment target X is transferred between the connected treatment chambers by the lifting devices 9 and 22.
The present invention is not limited thereto, but the treatment chambers connected to each other may be arranged horizontally, and the treatment target X may be transferred between the treatment chambers connected to each other by a horizontal conveyance.

Furthermore, in the above-mentioned embodiment, a configuration has been adopted in which the treatment target X is put into and taken out of the intermediate conveyance chamber 1.
The present invention is not limited thereto, but, for example, a configuration in which the treatment target X is put into and taken out of the cooling chamber 3 and a configuration in which only the extraction of the treatment target X from the cooling chamber 3 is performed may be adopted.

### [Industrial Applicability]

According to the present invention, the cooling chamber is dried using the drying device. Thus, by drying the cooling chamber before transferring the treatment target X between the cooling chamber and another treatment chamber, the cooling liquid (including the liquid particles and liquid formed by the condensation of the liquid particles) remaining in the cooling chamber is evaporated, and thus it is possible to prevent the cooling liquid from flowing in another treatment chamber. Thus, according to the present invention, it is possible to prevent treatment chambers other than the cooling chamber from being polluted with the cooling liquid in the multi-chamber heat treatment device.

### [Description of Reference Numerals]

S1: multi-chamber heat treatment device, 1: intermediate conveyance chamber (treatment chamber), 1a: central chamber, 1a1~1a8: side wall, 1b: heating lifting chamber, 2: heating chamber (treatment chamber, heat treatment chamber), 3: cooling chamber (treatment chamber, heat treatment chamber), 4: conveyance door, 5: push device, 6: upper lid, 7: upper lid lifting device, 8: mounting table, 9: lifting device, 10: mounting table, 11: gas feed device (drying device), 12: intermediate conveyance chamber vacuum pump, 13: heater, 14: gas feed device, 15: heating chamber vacuum pump, 16: nozzle, 17: header pipe, 18: cooling liquid recovery and feed device, 18 a: cooling liquid tank, 18 b: cooling liquid pump, 18 c: heat exchanger, 19: hot wind feed device (drying device), 20: cooling chamber vacuum pump, 21: cooling fan, 22: mounting table, 23: lifting device, 30: plasma treatment chamber, 31: inner wall, 32: electrode, T: tray, Ta: conductive tray, X: treatment target

## Claims

1. A multi-chamber heat treatment device that includes a plurality of treatment chambers having a heat treatment chamber, the device comprising:
a cooling chamber serving as the heat treatment chamber configured to cool a treatment target by latent heat of a liquid particle;
a treatment chamber different from the cooling chamber; and
a drying device configured to dry the cooling chamber.

2. The multi-chamber heat treatment device according to claim 1,
wherein the drying device includes a hot wind feed device configured to supply a hot wind into the cooling chamber.

3. The multi-chamber heat treatment device according to claim 1 or 2,
wherein the drying device includes a cooling gas feed device configured to blow a cooling gas capable of being used for cooling the treatment target into the cooling chamber to perform drying.

4. The multi-chamber heat treatment device according to Claim 3, further comprising:
a nozzle configured to spray the liquid particle into the cooling chamber; and
a header pipe configured to guide a cooling liquid serving as the liquid particle to the nozzle,
wherein the cooling gas feed device blows the cooling gas into the cooling chamber through the nozzle and the header pipe.

5. The multi-chamber heat treatment device according to any one of Claims 1 to 4,
wherein the other treatment chamber different from the cooling chamber includes a heating chamber configured to perform a heat treatment of the treatment target.

6. The multi-chamber heat treatment device according to Claim 5,
wherein the other treatment chamber different from the cooling chamber includes an intermediate conveyance chamber placed between the heating chamber and the cooling chamber.

7. The multi-chamber heat treatment device according to any one of Claims 1 to 6,
wherein the other treatment chamber different from the cooling chamber includes a plasma treatment chamber configured to perform a plasma treatment on the treatment target.

8. The multi-chamber heat treatment device according to Claim 7, further comprising:
an electrode that is fixedly placed inside the plasma treatment chamber, and comes in contact with a conductive tray on which the treatment target is mounted when the treatment target is conveyed into the plasma treatment chamber.

9. The multi-chamber heat treatment device according to any one of Claims 1 to 8, further comprising:
a lifting device on which the treatment chambers connected to each other are vertically placed to transfer the treatment target between the treatment chambers connected to each other.

10. The multi-chamber heat treatment device according to Claim 2,
wherein the hot wind feed device is available for a tempering treatment that is performed by supplying the hot wind into the cooling chamber on which the treatment target is mounted.
